# EUROPÄISCHE PATENTSCHRIFT

(11) **EP 3 318 778 B1**
(45) Veröffentlichungstag und Bekanntmachung des Hinweises auf die Patenterteilung: **28.08.2019**
(21) Anmeldenummer: 17197058.5
(22) Anmeldetag: 18.10.2017
(51) Int. Cl.: F16F 1/12

(54) **FEDERVORRICHTUNG**
SPRING DEVICE
DISPOSITIF FORMANT RESSORT

(30) Priorität: 21.10.2016 DE 102016120094
(43) Veröffentlichungstag der Anmeldung: 09.05.2018
(73) Patentinhaber: König + Neurath AG, 61184 Karben (DE)
(72) Erfinder: Meyer, Matthias, 91239 Henfenfeld (DE)
(74) Vertreter: Wolf, Michael

(56) Entgegenhaltungen:
- EP-A1- 1 469 225
- EP-A1- 2 438 343
- DE-A1-102007 059 140
- FR-A1- 2 373 410

## Beschreibung

Die Erfindung betrifft eine Federvorrichtung gemäß dem Oberbegriff des Patentanspruchs 1.

Eine Federvorrichtung der eingangs genannten Art ist aus dem Schutzrechtsdokument DE 10 2007 059 140 A1 bekannt. Diese Federvorrichtung besteht aus einer Schraubendruckfeder und an beiden freien Enden der Schraubendruckfeder angeordneten und als Widerlager für die Schraubendruckfeder ausgebildeten Befestigungseinrichtungen, wobei zwischen den Befestigungseinrichtungen eine im Innenraum der Schraubendruckfeder angeordnete und zur Einstellung verschiedener maximaler Federwege ausgebildete Teleskopeinrichtung vorgesehen ist, wobei die Teleskopeinrichtung zur Einstellung unterschiedlicher, den jeweilig maximalen Federweg definierender Anschlagspositionen verdrehbar ausgebildet ist, wobei die Teleskopeinrichtung aus zwei Anschlagselementen gebildet ist, von denen eines an der einen Befestigungseinrichtung und das andere an der anderen Befestigungseinrichtung angeordnet ist, wobei das eine Anschlagselement verdrehfest und das andere Anschlagselement verdrehbar an der jeweiligen Befestigungseinrichtung gelagert ist.

Unter Teleskopeinrichtung ist hier und nachfolgend dabei eine auch als Teleskoprohr bezeichnete Einrichtung zu verstehen (siehe auch https://de.wikipedia.org/wiki/Teleskoprohr), die als Führung für die genannten Befestigungseinrichtungen dient und letztlich dafür sorgt, dass die Schraubendruckfeder im wesentlich in ihrer Hauptaxialrichtung eindrückbar ist. Bei der vorgenannten Lösung erfolgt die Einstellung des maximalen Federweges dabei durch Einlegen von mit Vorsprüngen und Aussparungen versehenen Ringen, wobei der maximale Federweg umso kleiner ist, je mehr Ringe eingelegt werden.

Der Erfindung liegt die Aufgabe zugrunde, eine Federvorrichtung der eingangs genannten Art zu verbessern. Insbesondere soll eine Federvorrichtung geschaffen werden, bei der die Einstellung verschiedener maximaler Federwege auf besonders einfache Weise erfolgen kann.

Diese Aufgabe ist mit einer Federvorrichtung der eingangs genannten Art durch die im Kennzeichen des Patentanspruchs 1 aufgeführten Merkmale gelöst.

Nach der Erfindung ist also vorgesehen, dass die Anschlagselemente an ihren einander zugewandten Enden zur Einstellung verschiedener maximaler Federwege mit Anschlagsstufen versehen ausgebildet sind.

Mit anderen Worten zeichnet sich die erfindungsgemäße Federvorrichtung somit dadurch aus, dass die Einstellung der Federwegsbegrenzung nicht mehr durch Einlegen von Schreiben bzw. Ringen, sondern dadurch erfolgt, dass die Teleskopeinrichtung selbst zwischen verschiedenen Anschlagspositionen vorzugsweise um die Hauptachse der Schraubendruckfeder verdrehbar ausgebildet ist. Hierzu sind, was weiter unten noch genauer erläutert wird, an der Teleskopeinrichtung verschiedene Anschlagspaare vorgesehen, denen unterschiedliche maximale Federwege zugewiesen sind. Die erfindungsgemäße Federvorrichtung weist dabei zur Festlegung von mindestens zwei verschiedenen maximalen Federwegen mindestens zwei verschiedene Drehpositionen auf, die besonders bevorzugt, was ebenfalls weiter unten noch genauer erläutert wird, von außerhalb der Federvorrichtung einstellbar ausgebildet sind.

Andere vorteilhafte Weiterbildungen der erfindungsgemäßen Federvorrichtung ergeben sich aus den abhängigen Patentansprüchen.

Der Vollständigkeit halber wird noch auf das weiter abliegende Patentdokument EP 2 438 343 B1 hingewiesen, aus dem zwar eine teleskopisch ausziehbare Trägervorrichtung bekannt ist, die aber einerseits keine Schraubendruckfeder aufweist und bei der sich andererseits die Stufen in der eingestellten Position stets berühren. Verwiesen wird außerdem auf die Patentdokumente DE 202 15 950 U1, US 2007/0062770 A1, US 6155545 A und DE 10 2008 050 681 A1.

Die erfindungsgemäße Federvorrichtung einschließlich ihrer vorteilhaften Weiterbildungen gemäß der abhängigen Patentansprüche wird nachfolgend anhand der zeichnerischen Darstellung eines bevorzugten Ausführungsbeispiels näher erläutert.

Es zeigt
- Figur 1: perspektivisch die erfindungsgemäße Federvorrichtung einschließlich Schraubendruckfeder;
- Figur 2: in Seitenansicht die Federvorrichtung gemäß Figur 1 in Ausgangsstellung - zum besseren Verständnis nachfolgend stets ohne Schraubendruckfeder;
- Figur 3: in Seitenansicht die Federvorrichtung gemäß Figur 1 in Endstellung;
- Figur 4: als Explosionsdarstellung die Federvorrichtung gemäß Figur 1;
- Figur 5: im Schnitt die Federvorrichtung gemäß Figur 1;
- Figur 6: in Seitenansicht die Federvorrichtung gemäß Figur 1 bei leicht belasteter Schraubendruckfeder - zum besseren Verständnis in den nachfolgenden Figuren 7 bis 11 stets ohne Führungshülse;
- Figur 7: perspektivisch die Federvorrichtung gemäß Figur 6 in einer ersten Stellung des Anschlagselements bei unbelasteter Schraubendruckfeder;
- Figur 8: perspektivisch die Federvorrichtung gemäß Figur 7 in einer ersten Stellung des Anschlagselements bei maximal belasteter Schraubendruckfeder;
- Figur 9: perspektivisch die Federvorrichtung in einer zweiten Stellung des Anschlagselements bei maximal belasteter Schraubendruckfeder;
- Figur 10: perspektivisch die Federvorrichtung in einer dritten Stellung des Anschlagselements bei maximal belasteter Schraubendruckfeder;
- Figur 11: perspektivisch die Federvorrichtung in einer vierten Stellung des Anschlagselements bei maximal belasteter Schraubendruckfeder;
- Figur 12: perspektivisch, teilweise geschnitten, die Stelleinrichtung in Ruheposition;
- Figur 13: die Stelleinrichtung gemäß Figur 12, wobei mit dem Bowdenzug der erste Zahnring in Richtung des zweiten Zahnrings gezogen wird;
- Figur 14: die Stelleinrichtung gemäß Figur 13, wobei der zweite Zahnring aufgrund der Stellkraft des ersten Zahnrings und damit das Anschlagselement ein erstes Stück verdreht wird;
- Figur 15: die Stelleinrichtung gemäß Figur 14, wobei der Bowdenzug entlastet wird und sich die Zahnringe voneinander lösen; und
- Figur 16: die Stelleinrichtung gemäß Figur 15 (kurz vor der Ruheposition gemäß Figur 12), wobei der zweite Zahnring und damit das Anschlagselement aufgrund der Kurvenführung in der Befestigungseinrichtung ein zweites Stück verdreht wird.

Die in den Figuren dargestellte Federvorrichtung, die besonders bevorzugt zur Festlegung eines maximalen Schwenkwinkels einer Rückenlehne eines Bürostuhls verwendet wird, besteht in bekannter Weise aus einer Schraubendruckfeder 1 und an beiden freien Enden der Schraubendruckfeder 1 angeordneten und als Widerlager für die Schraubendruckfeder 1 ausgebildeten Befestigungseinrichtungen 2, wobei zwischen den Befestigungseinrichtungen 2 eine im Innenraum der Schraubendruckfeder 1 angeordnete und zur Einstellung verschiedener maximaler Federwege ausgebildete Teleskopeinrichtung 3 vorgesehen ist.

Weiterhin ist in bekannter Weise vorgesehen, dass mindestens eine der beiden Befestigungseinrichtungen 2 an ihrem der Schraubendruckfeder 1 abgewandten Ende ein Drehlager 2.2 mit einer senkrecht zur Hauptachse der Schraubendruckfeder 1 orientierten Drehachse aufweist. Über dieses Drehlager 2.2 kann die Federvorrichtung zum Beispiel mit der Mechanik eines Bürostuhls verbunden werden.

Wichtig für die erfindungsgemäße Federvorrichtung ist nun, dass die Teleskopeinrichtung 3 zur Einstellung unterschiedlicher, den jeweilig maximalen Federweg definierender Anschlagspositionen verdrehbar ausgebildet ist.

Etwas genauer betrachtet, ist, wie dargestellt, vorgesehen, dass die Teleskopeinrichtung 3 aus zwei, vorzugsweise eine zylindrische Außenkontur aufweisenden Anschlagselementen 3.1, 3.2 gebildet ist, von denen eines an der einen Befestigungseinrichtung 2 und das andere an der anderen Befestigungseinrichtung 2 angeordnet ist.

Ferner ist bevorzugt vorgesehen, dass an einer der Befestigungseinrichtungen 2 eine das an der anderen Befestigungseinrichtung 2 angeordnete Anschlagselement 3.1 umschließende, selbst von der Schraubendruckfeder 1 umschlossene Führungshülse 2.1 angeordnet ist.

Weiterhin ist vorgesehen, dass das eine Anschlagselement 3.1 verdrehfest und das andere Anschlagselement 3.2 verdrehbar an der jeweiligen Befestigungseinrichtung 2 gelagert ist.

Außerdem ist wesentlich, dass die Anschlagselemente 3.1, 3.2 an ihren einander zugewandten Enden zur Einstellung verschiedener maximaler Federwege mit Anschlagsstufen 3.3 versehen ausgebildet sind. Diese Anschlagsstufen 3.3 sind dabei bevorzugt entlang einer gedachten Schraubenlinie, also insbesondere wendeltreppenartig, nebeneinander angeordnet.

Ferner ist bevorzugt vorgesehen, dass das eine Anschlagselement 3.2 einen Führungsbolzen 3.2.1 und das andere Anschlagselement 3.1 einen zur verschieblichen und drehbaren Aufnahme des Führungsbolzens 3.2.1 ausgebildeten Führungshohlraum 3.1.1 aufweist. Dabei sind die oben genannten Anschlagsstufen 3.3 vorzugsweise konzentrisch um den Führungshohlraum 3.1.1 bzw. um den Führungsbolzen 3.2.1 angeordnet.

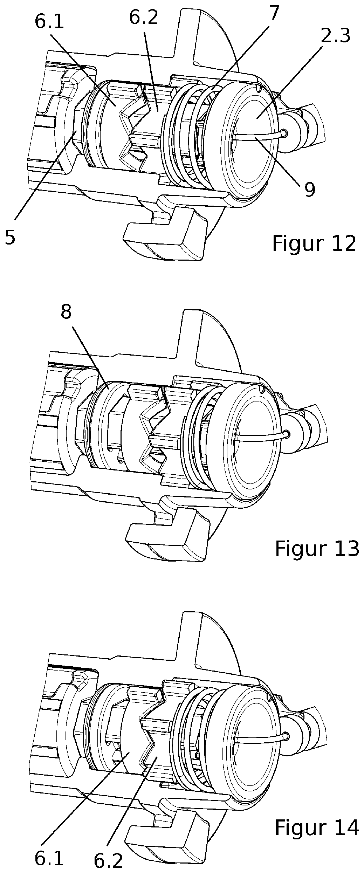

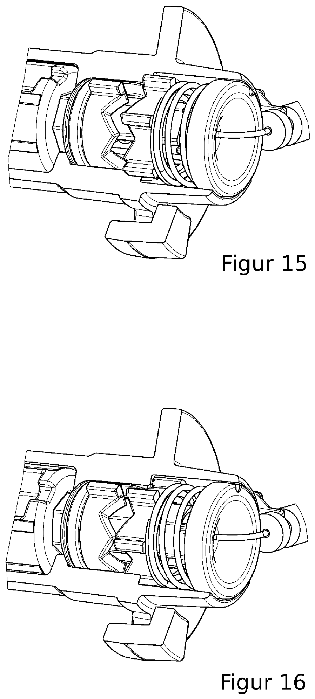

Insbesondere mit Verweis auf die Figuren 12 bis 16 ist zum Verdrehen des einen Anschlagselements 3.2 besonderes bevorzugt eine Stelleinrichtung 4 an einer der Befestigungseinrichtungen 2 angeordnet.

Diese Stelleinrichtung 4 ist dabei, was weiter unten noch genauer erläutert wird, besonders bevorzugt analog einer zum Ein- und Ausfahren einer Mine vorgesehenen Kugelschreibermechanik ausgebildet (zur Kugelschreiberfunktion siehe auch https://www.youtube.com/watch?v=2b1wA6mD3UE).

Etwas genauer betrachtet, ist besonders bevorzugt vorgesehen, dass das verdrehbar gelagerte Anschlagselement 3.2 verdrehfest mit einer drehbar in der Befestigungseinrichtung 2 gelagerten Drehachse 5 verbunden ist, die vorzugsweise einen mehreckigen, besonders bevorzugt, wie dargestellt, einen sechseckigen, Querschnitt aufweist.

Weiterhin ist bevorzugt vorgesehen, dass auf der Drehachse 5 ein erster und ein zweiter, jeweils in Hauptrichtung der Drehachse 5 verschlieblich gelagerter Zahnring 6.1, 6.2 angeordnet ist. Diese Zahnringe 6.1, 6.2 weisen dabei bevorzugt eine einander zugewandte, miteinander in Eingriff bringbare Verzahnung auf, wobei die Verzahnung bei Kontakt der Zahnringe 6.1, 6.2 miteinander zu einer Verdrehung der Zahnringe 6.1, 6.2 zueinander ausgebildet ist.

Ferner ist, was ebenfalls weiter unten noch genauer erläutert wird, besonders bevorzugt vorgesehen, dass der dem Anschlagselement 3.2 nähere, erste Zahnring 6.1 in einer Axialführung in der Befestigungseinrichtung 2 axialverschieblich und drehbar zur Drehachse 5 gelagert ausgebildet ist. Außerdem ist besonders bevorzugt vorgesehen, dass der dem Anschlagselement 3.2 fernere, zweite Zahnring 6.2 in einer Kurvenführung in der Befestigungseinrichtung 2 verschieblich und verdrehfest zur Drehachse 5 gelagert ausgebildet ist.

Darüber hinaus ist einerseits bevorzugt vorgesehen, dass zwischen dem zweiten Zahnring 6.2 und der Befestigungseinrichtung 2 ein den zweiten Zahnring 6.2 in Richtung des ersten Zahnrings 6.1 drückendes Federelement 7, insbesondere eine Schraubendruckfeder, angeordnet ist.

Andererseits ist weiterhin vorgesehen, dass zwischen dem drehbar gelagerten Anschlagselement 3.2 und dem ersten Zahnring 6.1 ein verdrehfest mit der Drehachse 5 verbundenes, drehbar in der Befestigungseinrichtung 2 gelagertes Widerlagerelement 8 angeordnet ist, das eine weitere Bewegung des ersten Zahnrings 6.1 in Richtung Anschlagselement 3.2 verhindert.

Ferner ist besonders bevorzugt vorgesehen, dass der erste Zahnring 6.1 zur Verschiebung in Richtung des zweiten Zahnrings 6.2 mit einem von außerhalb der Befestigungseinrichtung 2 betätigbaren Bowdenzug 9 wirkverbunden ausgebildet ist. Dabei ist schließlich an einem Bereich der Befestigungeinrichtung 2 jenseits der Schraubendruckfeder 1 ein trichterartiger, eine gezielte Umlenkung ermöglichender Einlaufbereich 2.3 für den Bowdenzug 9 vorgesehen.

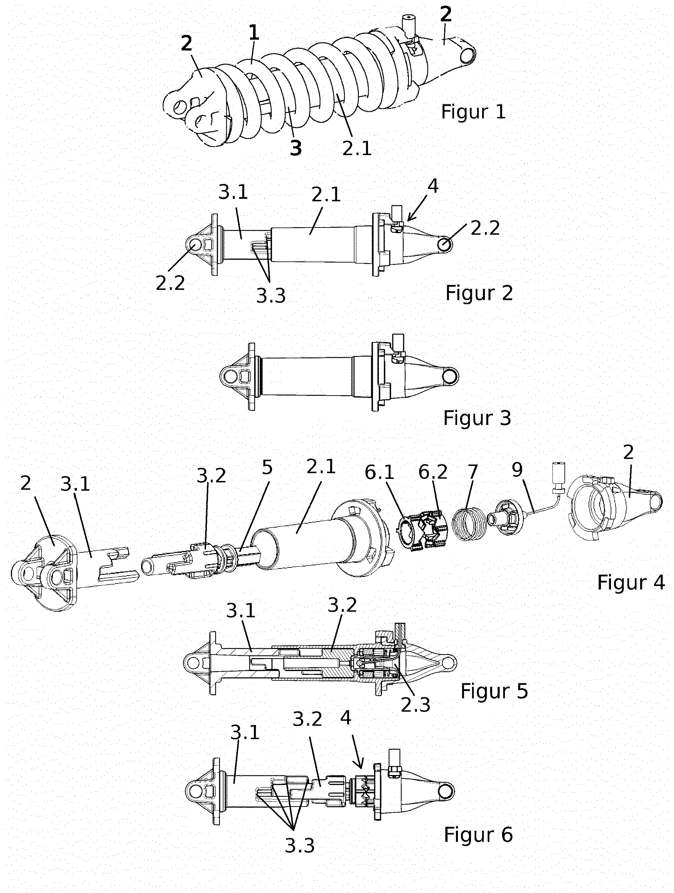

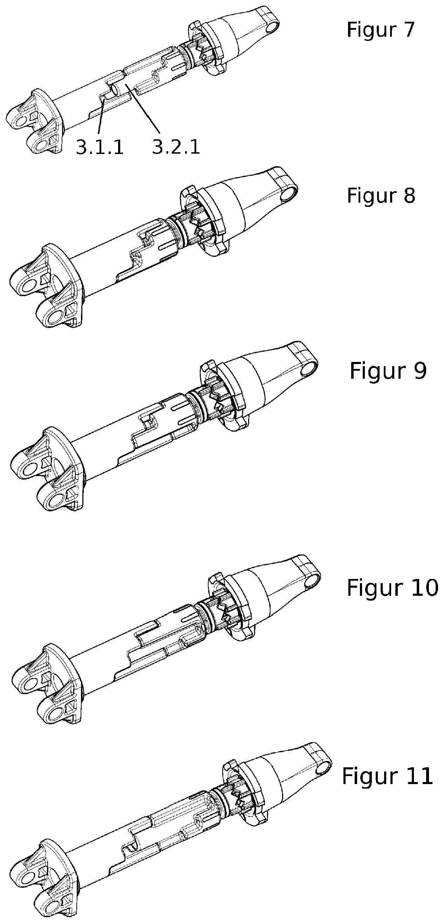

Die erfindungsgemäße Federvorrichtung funktioniert, wie folgt:
Wichtig zum Verständnis der erfindungsgemäßen Federvorrichtung ist zunächst, dass sich die beiden Anschlagselemente 3.1, 3.2 erst berühren, wenn die Schraubendruckfeder 1 entsprechend belastet wird. Über die Einstellung der Anschlagselemente 3.1, 3.2 kann dabei definiert werden, wie weit die Schraubendruckfeder 1 zusammendrückbar ist. In Figur 6, 7 und 8 ist eine Stellung der Anschlagselemente 3.1, 3.2 zueinander gezeigt, bei der die Befestigungseinrichtungen 2 einander besonders nah gebracht werden können, die Schraubendruckfeder 1 also besonders stark zusammendrückbar ist. In Figur 9 ist das verdrehbare Anschlagselement 3.2 mit Hilfe der weiter unten noch genauer erläuterten Stelleinrichtung 4 um eine Drehposition verstellt worden, woraus sich ergibt, dass die Befestigungseinrichtungen 2 einander nicht mehr ganz so nah gebracht werden können. In Figur 10 und 11 sind zwei weitere solcher Stellungen gezeigt, d. h. es gibt bei der dargestellten Lösung insgesamt vier Drehpositionen für das verdrehbare Anschlagselement 3.2, was zur Folge hat, dass man insgesamt zwischen vier unterschiedlichen, maximalen Federwegen wählen kann.

Zur Verstellung des verdrehbaren Anschlagselements 3.2 ist die nunmehr zu beschreibende Stelleinrichtung 4 vorgesehen:
Diese wird über den Bowdenzug 9 betätigt, wobei pro Belastung des Bowdenzugs 9 über ein entsprechendes, nicht extra dargestelltes und typischerweise handbetätigtes Hebelelement das Anschlagselement 3.2 um eine Drehposition weiter gedreht wird. Das hebelabgewandte Ende des Bowdenzugs 9 greift dabei am oben bereits genannten ersten Zahnring 6.1 an. Dieser ist frei drehbar auf der Drehachse 5, aber verdrehfest zur Befestigungseinrichtung 2 bzw. axialverschieblich zur Führungshülse 2.1 gelagert. Ein Zug am Bowdenzug 9 führt dazu, dass der erste Zahnring 6.1 in Figur 12 nach rechts bewegt wird. Dabei kommt es dann zu einer Berührung mit dem zweiten Zahnring 6.2, wobei dieser ebenfalls und entgegen der vom Federelement 7 erzeugten Kraft einerseits nach rechts bewegt, andererseits aufgrund der Verzahnung aber auch noch zusätzlich verdreht wird. Dies ist dabei möglich, da der zweite Zahnring 6.2 in diesem Bereich frei drehbar innerhalb der Befestigungeinrichtung 2 gelagert ist, wobei die Verdrehung allerdings aufgrund der drehfesten Verbindung zwischen dem zweiten Zahnring 6.2 und der Drehachse 5 direkt auf das verdrehbare Anschlagselement 3.2 übertragen wird.

Wird nun der Bodwenzug 9 wieder entlastet, führt der Druck des Federelements 7 dazu, dass sich der zweite Zahnring 6.2 in Figur 12 nach links bewegt. Da der zweite Zahnring 6.2 dabei in einer eine weitere Drehung auslösenden, nicht extra dargestellten Kurvenführung an der Befestigungeinrichtung 2 geführt ist, wird auf diese Weise ein weiteres Drehmoment auf die Drehachse 5 und damit auf das verdrehbare Anschlagselement 3.2 ausgeübt, d. h. genau wie bei einem Kugelschreiber führt eine Axialkraft (hier ausgelöst durch den Bowdenzug 9) zu einer durch die Verzahnung und die Kurvenführung bedingten Verdrehung des zweiten Zahnrings 6.2. Das Maß der Verdrehung ist dabei so gewählt, dass pro Hin- und Herbewegung des ersten Zahnrings 6.1 gerade genau ein Wechsel von einer zur nächsten Anschlagsstufe 3.3 erfolgt, wobei schließlich noch anzumerken bleibt, dass der Bowdenzug 9 entsprechend der Kugelschreibermechanik beliebig oft betätigbar ist, wobei durch jede einzelne Betätigung stets einfach nur die nächste Anschlagsstufe 3.3 erreicht wird, d. h. je nach Anzahl der vorgesehenen Anschlagsstufen 3.3 gelangt man bei mehrfacher Betätigung des Bowdenzugs 9 wieder zur Ausgangsstellung zurück und kann die verschiedenen Anschlagsstufen 3.3 erneut durchfahren.

### Bezugszeichenliste

- 1: Schraubendruckfeder
- 2: Befestigungseinrichtung
- 2.1: Führungshülse
- 2.2: Drehlager
- 2.3: Einlaufbereich
- 3: Teleskopeinrichtung
- 3.1: Anschlagselement
- 3.1.1: Führungshohlraum
- 3.2: Anschlagselement
- 3.2.1: Führungsbolzen
- 3.3: Anschlagsstufe
- 4: Stelleinrichtung
- 5: Drehachse
- 6.1: erster Zahnring
- 6.2: zweiter Zahnring
- 7: Federelement
- 8: Widerlagerelement
- 9: Bowdenzug

## Patentansprüche

1. Federvorrichtung, umfassend eine Schraubendruckfeder (1) und an beiden freien Enden der Schraubendruckfeder (1) angeordnete und als Widerlager für die Schraubendruckfeder (1) ausgebildete Befestigungseinrichtungen (2), wobei zwischen den Befestigungseinrichtungen (2) eine im Innenraum der Schraubendruckfeder (1) angeordnete und zur Einstellung verschiedener maximaler Federwege ausgebildete Teleskopeinrichtung (3) vorgesehen ist, wobei die Teleskopeinrichtung (3) zur Einstellung unterschiedlicher, den jeweilig maximalen Federweg definierender Anschlagspositionen verdrehbar ausgebildet ist, wobei die Teleskopeinrichtung (3) aus zwei Anschlagselementen (3.1, 3.2) gebildet ist, von denen eines an der einen Befestigungseinrichtung (2) und das andere an der anderen Befestigungseinrichtung (2) angeordnet ist, wobei das eine Anschlagselement (3.1) verdrehfest und das andere Anschlagselement (3.2) verdrehbar an der jeweiligen Befestigungseinrichtung (2) gelagert ist,
**dadurch gekennzeichnet,**
**dass** die Anschlagselemente (3.1, 3.2) an ihren einander zugewandten Enden zur Einstellung verschiedener maximaler Federwege mit Anschlagsstufen (3.3) versehen ausgebildet sind.

2. Federvorrichtung nach Anspruch 1,
**dadurch gekennzeichnet,**
**dass** die Anschlagselemente (3.1, 3.2) an ihren einander zugewandten Enden zur Einstellung verschiedener maximaler Federwege mit Anschlagsstufen (3.3) versehen ausgebildet sind.

3. Federvorrichtung nach Anspruch 2,
**dadurch gekennzeichnet,**
**dass** die Anschlagsstufen (3.3) entlang einer gedachten Schraubenlinie nebeneinander angeordnet sind.

4. Federvorrichtung nach einem der Ansprüche 1 bis 3,
**dadurch gekennzeichnet,**
**dass** an einer der Befestigungseinrichtungen (2) zum Verdrehen des einen Anschlagselements (3.2) eine Stelleinrichtung (4) angeordnet ist.

5. Federvorrichtung nach einem der Ansprüche 1 bis 4,
**dadurch gekennzeichnet,**
**dass** das verdrehbar gelagerte Anschlagselement (3.2) verdrehfest mit einer drehbar in der Befestigungseinrichtung (2) gelagerten Drehachse (5) verbunden ist.

6. Federvorrichtung nach Anspruch 5,
**dadurch gekennzeichnet,**
**dass** auf der Drehachse (5) ein erster und ein zweiter, jeweils in Hauptrichtung der Drehachse (5) verschlieblich gelagerter Zahnring (6.1, 6.2) angeordnet ist.

7. Federvorrichtung nach Anspruch 6,
**dadurch gekennzeichnet,**
**dass** der dem Anschlagselement (3.2) nähere, erste Zahnring (6.1) in einer Axialführung in der Befestigungseinrichtung (2) axialverschieblich und drehbar zur Drehachse (5) gelagert ausgebildet ist.

8. Federvorrichtung nach Anspruch 6 oder 7,
**dadurch gekennzeichnet,**
**dass** der dem Anschlagselement (3.2) fernere, zweite Zahnring (6.2) in einer Kurvenführung in der Befestigungseinrichtung (2) verschieblich und verdrehfest zur Drehachse (5) gelagert ausgebildet ist.

## Claims

1. A spring device comprising a helical compression spring (1) and fastening mechanisms (2) arranged on both free ends of the helical compression spring (1) and configured as abutments for the helical compression spring (1), wherein a telescopic device (3) is provided between the fastening mechanisms (2), arranged in the inside space of the helical compression spring (1) and configured for the setting of different maximum deflection paths, wherein the telescopic mechanism (3) is rotatably configured for the setting of different stop positions defining the maximum spring deflection in each case, wherein the telescopic device (3) is formed from two stop elements (3.1, 3.2), one of which is arranged on the one fastening mechanism (2) and the other on the other fastening mechanism (2), wherein the one stop element (3.1) is mounted in a non-rotatable manner and the other stop element (3.2) in a rotatable manner on the respective fastening device (2),
**characterized in that**
the stop elements (3.1, 3.2) are provided with stop steps (3.3) on their mutually facing ends for setting different maximum spring deflections.

2. The spring device according to claim 1,
**characterized in that**
the stop elements (3.1, 3.2) are provided with stop steps (3,3) on their mutually facing ends for setting different maximum spring deflections.

3. The spring device according to claim 2,
**characterized in that**
the stop steps (3.3) are arranged along an imaginary helical line alongside one another.

4. The spring device according to one of claims 1 to 3,
**characterized in that**
an adjusting mechanism (4) is arranged on one of the fastening mechanisms (2) for rotating the one stop element (3.2).

5. The spring device according to one of claims 1 to 4,
**characterized in that**
the rotatably mounted stop element (3.2) is connected in a non-rotatable manner to a rotational axis (5) mounted in the fastening mechanism (2) in a rotatable manner.

6. The spring device according to claim 5,
**characterized in that**
a first and a second toothed ring (6.1, 6.2) mounted displaceably in each case in the main direction of the rotational axis (5) are arranged on the rotational axis (5).

7. The spring device according to claim 6,
**characterized in that**
the first toothed ring (6.1) closer to the stop element (3.2) is configured mounted axially displaceably and rotatably in respect of the rotational axis (5) in an axial guide in the fastening mechanism.

8. The spring device according to claim 6 or 7,
**characterized in that**
the second toothed ring (6.2) further from the stop element (3.2) is configured mounted displaceably and non-rotatably in respect of the rotational axis (5) in a curve guide in the fastening mechanism (2).

## Revendications

1. Dispositif à ressort, comprenant un ressort de compression hélicoïdal (1) et des dispositifs de fixation (2) disposés aux deux extrémités libres du ressort de compression hélicoïdal (1) et constitués en tant que butées d'appui pour le ressort de compression hélicoïdal (1), un dispositif télescopique (3) disposé dans l'espace intérieur du ressort de compression hélicoïdal (1) et constitué pour le réglage de différents débattements maximaux étant prévu entre les dispositifs de fixation (2), le dispositif télescopique (3) étant constitué pouvant tourner pour le réglage de différentes positions de butée définissant le débattement de ressort à chaque fois maximal, le dispositif télescopique (3) étant formé de deux éléments de butée (3.1, 3.2), dont un est disposé sur un dispositif de fixation (2) et l'autre sur l'autre dispositif de fixation (2), un élément de butée (3.1) étant logé solidaire en rotation et l'autre élément de butée (3.2) pouvant tourner sur le dispositif de fixation (2) correspondant,
**caractérisé en ce que**
les éléments de butée (3.1, 3.2) sont constitués dotés de niveaux de butée (3.3) à leurs extrémités tournées l'une vers l'autre pour le réglage de différents débattements maximaux.

2. Dispositif à ressort selon la revendication 1,
**caractérisé en ce que**
les éléments de butée (3.1, 3.2) sont constitués dotés de niveaux de butée (3.3) à leurs extrémités tournées l'une vers l'autre pour le réglage de différents débattements maximaux.

3. Dispositif à ressort selon la revendication 2,
**caractérisé en ce que**
les niveaux de butée (3.3) sont disposés l'un à côté de l'autre le long d'une ligne hélicoïdale imaginée.

4. Dispositif à ressort selon l'une quelconque des revendications 1 à 3,
**caractérisé en ce qu'**un
dispositif de réglage (4) est disposé sur un des dispositifs de fixation (2) pour tourner un élément de butée (3.2).

5. Dispositif à ressort selon la revendication 1 à 4,
**caractérisé en ce que**
l'élément de butée (3.2) logé pouvant tourner est relié solidaire en rotation avec un axe de rotation (5) logé pouvant tourner dans le dispositif de fixation (2).

6. Dispositif à ressort selon la revendication 5,
**caractérisé en ce qu'**une
sur l'axe de rotation (5) une première et une deuxième couronne dentée (6.1, 6.2) sont respectivement logées de façon mobile dans la direction principale de l'axe de rotation (5).

7. Dispositif à ressort selon la revendication 6,
**caractérisé en ce que**
la première couronne dentée (6.1) plus proche de l'élément de butée (3.2) est constituée logée de façon mobile dans le sens axial et pouvant tourner par rapport à l'axe de rotation (5) dans un guidage axial dans le dispositif de fixation (2).

8. Dispositif à ressort selon la revendication 6 ou 7,
**caractérisé en ce que**
la deuxième couronne dentée (6.2) plus éloignée de l'élément de butée (3,2) est constituée logée de façon mobile et solidaire en rotation par rapport à l'axe de rotation (5) dans un guidage à came dans le dispositif de fixation (2).
